# NEUE EUROPÄISCHE PATENTSCHRIFT

(11) **EP 0 688 262 B2**
(45) Veröffentlichungstag und Bekanntmachung des Hinweises auf die Entscheidung über den Einspruch: **08.12.2004**
(45) Hinweis auf die Patenterteilung: 02.06.1999
(21) Anmeldenummer: 95905081.6
(22) Anmeldetag: 19.12.1994
(51) Int. Cl.: B29C 67/00

(54) **VERFAHREN UND VORRICHTUNG ZUM HERSTELLEN EINES DREIDIMENSIONALEN OBJEKTS**
PROCESS AND DEVICE FOR PRODUCING THREE-DIMENSIONAL OBJECTS
PROCEDE ET DISPOSITIF DE PRODUCTION D'OBJETS TRIDIMENSIONNELS

(30) Priorität: 11.01.1994 DE 4400523
(43) Veröffentlichungstag der Anmeldung: 27.12.1995
(73) Patentinhaber: EOS GmbH Electro Optical Systems, 82152 Krailling (DE)
(72) Erfinder: RETALLICK, David, D-86505 Münsterhausen (DE); LANGER, Hans, J., D-82166 Gräfelfing (DE)
(74) Vertreter: Prüfer, Lutz H., Dipl.-Phys.
(86) Internationale Anmeldenummer: PCT/EP1994/004214
(87) Internationale Veröffentlichungsnummer: WO 1995/018715

(56) Entgegenhaltungen:
- EP-A- 0 431 924
- EP-A- 0 450 762
- WO-A-90/03893
- WO-A-93/08928
- WO-A-93/25336
- DE-U- 9 319 567
- DE-U- 9 400 372
- US-A- 4 323 756
- US-A- 4 863 538

## Beschreibung

Die Erfindung betrifft ein Verfahren und eine Vorrichtung zum Herstellen eines dreidimensionalen Objekts nach dem Oberbegriff des Anspruchs 1 bzw. des Anspruchs 9.

Ein derartiges Verfahren bzw. eine derartige Vorrichtung ist beispielsweise aus der US 4 863 538 bekannt. Hier wird eine vorbestimmte Menge eines pulverförmiges Materials auf eine absenkbare Unterlage gegeben und dort mittels einer über die Unterlage bewegbaren Walze unter gleichzeitiger Rotation der Walze verteilt. Danach wird das verteilte Material an den dem Objekt entsprechenden Stellen der so gebildeten Materialschicht bestrahlt, sodaß das Material dort zusammensintert. Diese Art der Materialauftragung ist jedoch hinsichtlich Schnelligkeit der Auftragung und Genauigkeit der Einstellung einer bestimmten Dicke des Materials nicht optimal.

Aus der EP 0 450 762 A1 ist ein Verfahren zum Herstellen eines dreidimensionalen Objektes nach dem Oberbegriff des Patentanspruches 1 bekannt. Eine gleichmäßige Schichtdicke wird durch Glätten des aufgebrachten Materials durch ein Abstreifmesser erhalten. Aus der EP 0 450 762 A1 ist ferner eine Vorrichtung nach dem Oberbegriff des Patentanspruches 9 bekannt.

Aus der EP 0 431 924 A2 und der WO 93/25336 ist es jeweils bekannt, in einem Verfahren zur Herstellung eines dreidimensionalen Objektes aus verfestigbarem Pulvermaterial eine gewünschte Kompaktierung der zu verfestigenden Pulverteilchen mittels eines vibrierenden Abstreifers zu erzeugen. Die Vibrationsbewegung des Abstreifers erfolgt dabei in einer Richtung senkrecht zur Oberfläche der Pulverschicht. Aus der WO 93/25336 ist es ferner bekannt, das zu verfestigende Pulvermaterial mittels einer vibrierenden Walze zu glätten und zu verdichten. Die Walze wird dabei über die Oberfläche der Pulverschicht bewegt und vibriert dabei. Die Vibration hat dabei eine Komponente in Längsrichtung der Walze und eine Komponente senkrecht zur Pulverschicht. Dadurch wird ein Stampfen und damit eine Kompaktierung der Pulverschicht bewirkt.

Aus der US 4 323 756 ist ein Verfahren zum Beschichten eines Substrats mit Metall bekannt. Dabei wird eine Metallpulverschicht mittels eines Energiestrahles auf das Substrat aufgeschmolzen. Das Metallpulver befindet sich in einer Zuführungsvorrichtung, die eine Düse aufweist, auf der das Metallpulver ausgegeben wird, um gleich darauf geschmolzen zu werden. In dem zur

Düse führenden Kanal ist ein Vibrationselement in Form eines vibrierenden Stabes angeordnet.

Aus der WO 90/03893 ist ein Verfahren und eine Vorrichtung zum Herstellen von dreidimensionalen Objekten aus aufeinanderfolgenden Schichten eines pulverförmigen verfestigbaren Materials bekannt, wobei die Verfestigung der Pulverschichten unter Schutzgasatmosphäre ausgeführt wird.

Es ist Aufgabe der Erfindung, das bekannte Verfahren bzw. die bekannte Vorrichtung so zu verbessern, daß die Materialauftragung und die Einstellung der Schichtdicke des aufgetragenen Materials beschleunigt und verbessert wird.

Diese Aufgabe wird erfindungsgemäß durch ein Verfahren mit den Merkmalen des Anspruchs 1 bzw. durch eine Vorrichtung mit den Merkmalen des Anspruchs 9 gelöst.

Weiterbildungen der Erfindung sind in den Unteransprüchen gekennzeichnet.

Die Erfindung wird im weiteren anhand eines Ausführungsbeispiels unter Bezug auf die Figuren beschrieben. Von den Figuren zeigen:
- Fig. 1: eine schematische Seitenansicht der erfindungsgemäßen Vorrichtung; und
- Fig. 2: eine vergrößerte Schnittansicht der Aufbringvorrichtung nach der Erfindung.

Die Vorrichtung weist einen im wesentlichen horizontal angeordneten Arbeitstisch 1 mit einem Loch in Form eines Aussschnittes 2 mit einem Querschnitt, der größer ist als die größte Querschnittsfläche des herzustellenden Objekts 3, auf. Oberhalb des Arbeitstisches ist eine Bestrahlungseinrichtung 4, beispielsweise ein Laser, angeordnet, die einen gerichteten Lichtstrahl 5 abgibt. Dieser wird über eine Ablenkeinrichtung 6, beispielsweise einen Drehspiegel, als abgelenkter Strahl 7 auf die Ebene des Arbeitstisches abgelenkt. Eine Ablenksteuerung 8 steuert die Ablenkeinrichtung derart, daß der abgelenkte Strahl 7 auf jede gewünschte Stelle innerhalb des vom Ausschnitt 2 definierten Arbeitsbereiches auftrifft.

Eine als im wesentlichen ebene Unterlage 9 weist eine dem Ausschnitt 2 entsprechende Form auf und ist mittels einer schematisch angedeuteten Höheneinstellvorrichtung 10 in Richtung des Pfeils 11 von einer höchsten Stellung, in der die Oberfläche der Unterlage 9 innerhalb des Ausschnittes 2 und im wesentlichen in derselben Höhe wie die Oberfläche des Arbeitstisches 1 liegt, während der Herstellung des Objekts in der weiter unten beschriebenen Weise soweit absenkbar, daß das fertiggestellte Objekt 3 unterhalb des Arbeitstisches 1 entnommen werden kann.

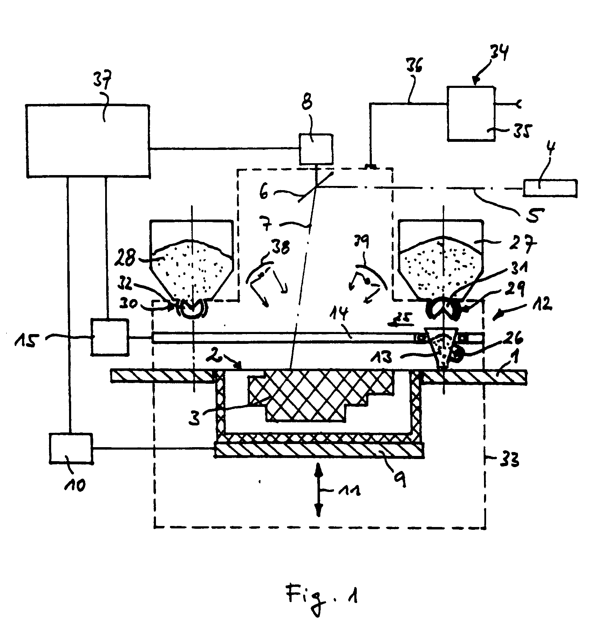

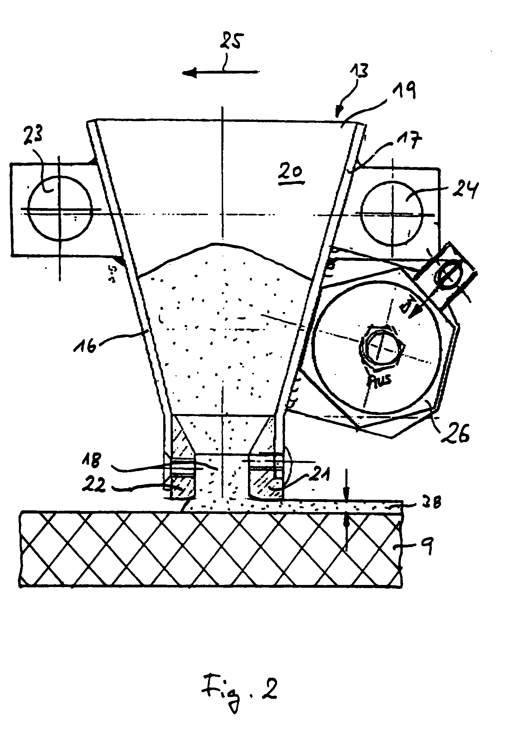

Oberhalb des Arbeitstisches ist eine Aufbringvorrichtung 12 zum Aufbringen des zu verfestigenden Materials auf den Arbeitstisch 1 und die Unterlage 9 angeordnet. Die Aufbringvorrichtung weist einen in Figur 2 genauer dargestellten Behälter 13 in Form einer Rinne auf, die sich quer über den Auschnitt 2 bzw. die Unterlage 9 erstreckt und an Führungen 14 mittels eines Verschiebeantriebs 15 im wesentlichen quer zu ihrer Erstreckung über den Ausschnitt 2 bzw. die Unterlage 9 von einer in Figur 1 gezeigten ersten Endstellung, in der sich der Behälter 13 auf einer Seite des Ausschnittes 2 außerhalb desselben befindet, in eine zweite, im wesentlichen symmetrische Endstellung, in der sich der Behälter 13 auf der anderen Seite des Ausschnittes 2 außerhalb desselben befindet, verschiebbar ist.

Der Behälter 13 weist einen im wesentlichen trichterförmigen Querschnitt auf, der von zwei Seitenwänden 16,17 begrenzt ist und sich von einer schlitzförmigen schmaleren unteren Öffnung 18 zu einer breiteren oberen Öffnung 19 hin erweitert. Die untere und obere Öffnung 18,19 erstrecken sich jeweils über im wesentlichen die gesamte Länge des Behälters 13, sodaß von diesen zusammen mit dem von den Seitenwänden begrenzten Innenraum 20 ein sich nach unten verengender Kanal mit einer Länge, die im wesentlichen der Ausdehnung des Ausschnittes 2 bzw. der Unterlage 9 entspricht, gebildet ist.

An den dem Arbeitstisch 1 zugewandten unteren Rändern der Seitenwände 16,17 sind jeweils Abstreifelemente 21,22 befestigt, die sich parallel zum Arbeitstisch 1 über im wesentlichen die gesamte Länge der unteren Öffnung erstrecken. Der Abstand des eine Abstreifkante bildenden unteren Randes der Abstreifelemente 21,22 vom Arbeitstisch bzw. von der Unterlage 9 in deren höchster Stellung ist dabei derart eingestellt bzw. einstellbar, daß der Behälter 13 gerade eben berührungsfrei oder nur mit geringer Reibung über den Arbeitstisch 1 verschoben werden kann.

Der Behälter ist über in Figur 2 gezeigte Querführungen 23,24 in Richtung seiner Längserstreckung bzw. quer zur Verschieberichtung 25 verschiebbar aufgehängt und mittels (nicht gezeigter) elastischer Elemente, beispielsweise Federn, um eine Ausgangslage elastisch federnd auslenkbar gehalten. Eine an einer Seitenwand 17 oder auch an einem anderen Teil des Behälters 13 befestigte Vibrationseinrichtung 26, beispielsweise ein elektrisch oder hydraulisch betätigter Rüttler, ist so ausgebildet, daß er den Behälter 13 im Zusammenwirken mit den elastischen Elementen in eine Vibration mit einer Auslenkung in Richtung der unteren Öffnung und der Abstreifelemente, d.h. quer zur Verschieberichtung 25, und parallel zur Ebene der Arbeitstisches 1 bzw. der Unterlage 9 versetzt.

Oberhalb des Behälters 13 in dessen beiden Endstellungen bzw. dessen oberer Öffnung 19 ist in der in Figur 1 gezeigten Weise jeweils ein Vorratsbehälter 27,28 für zu verfestigendes Material und eine an dessen unterem Ende vorgesehene Beschickungsvorrichtung 29,30 angeordnet. Die Beschickungsvorrichtung 29,30 ist jeweils als eine um eine horizontale Achse, die oberhalb der Verschiebeebene des Behälters 13 und parallel zu dessen Erstreckung angeordet ist, drehbare Walze 31,32 mit einem an deren Umfang angeordneten kerbfömigen Ausschnitt (Kerbwalze) ausgebildet, der mittels eines (nicht dargestellten) Antriebes von einer in Figur 1 links gezeigten ersten Stellung, in der der kerbförmige Ausschnitt nach oben weist und mit dem Innenraum des Vorratsbehälters 28 verbunden ist, um etwa 180° in eine rechts in Figur 1 dargestellte Entleerungsstellung, in der der kerbförmige Ausschnitt nach unten weist und der oberen Öffnung 19 des Behälters gegenüberliegt, drehbar ist.

Der Arbeitstisch 1, die Unterlage 9 und die Aufbringvorrichtung 12 sind von einem in Figur 1 gestrichelt angedeuteten wärmeisolierten Gehäuse 33 umschlossen, das mit einer Inertgaszufuhr 34 verbunden ist. Als Inertgas kommt vorzugsweise Stickstoff in Frage, der mittels einer (an sich bekannten) Membran-Trennvorrichtung 35 aus Luft erzeugt wird und über eine Zufuhrleitung 36 ins Gehäuse 33 eingespeist wird. Vorzugsweise wird die Zufuhrleitung 36 vor der Einspeisung über weitere zu kühlende Teile wie z.B. die Bestrahlungseinrichtung 4, die Ablenkeinrichtung 6 und die Ablenksteuerung 8 geführt.

Schließlich ist eine auf den Ausschnitt 2 gerichtete Strahlunngsheizung 38,39 und eine zentrale Steuereinheit 37 vorgesehen, die mit der Höheneinstellvorrichtung 10, der Ablenksteuerung 8 und dem Verschiebeantrieb 15 zur Durchführung der nachfolgend beschriebenen Schritte verbunden ist.

Im Betrieb werden zunächst die Vorratsbehälter 27,28 mit einem für die Objektherstellung geeigneten Material, beispielsweise einem Kunststoff-, Metalloder Keramikpulver oder auch einer Mischform, d.h. beispielsweise einem kunststoffüberzogenen Metalloder Keramikpulver, gefüllt. Die Unterlage 9 wird mittels der Höheneinstellvorrichtung 10 in die höchste Stellung gefahren, in der die Oberfläche der Unterlage 9 in einer Ebene mit der Oberfläche des Arbeitstisches 1 liegt, und anschließend um den Betrag der vorgesehenen Dicke der ersten Materialschicht abgesenkt, sodaß innerhalb des Ausschnittes 2 ein abgesenkter Bereich gebildet ist, der seitlich von den Wänden des Ausschnitts 2 und unten von der Unterlage 9 begrenzt ist. Die Aufbringvorrichtung 12 wird mittels des Verschiebeantriebs 15 in ihre Ausgangsstellung gebracht, in der der Behälter 13 unterhalb der Beschickungsvorrichtung 29 bzw. der Walze 31 steht. Ferner wird von der Inertgaszufuhr 34 z.B. Stickstoff in das Gehäuse 33 eingespeist, bis dort eine gewünschte Inertgasatmosphäre erhalten ist.

Durch ein- oder mehrmalige Rotation der Walze 29 wird aus dem Vorratsbehälter 27 ein vorbestimmtes Volumen des Materials, das dem ein- oder mehrfachen Volumen der Kerbe in der Walze 29 entspricht, durch die unter der Walze 29 angeordnete obere Öffnung 19 in den Behälter 13 eingefüllt. Mittels des Verschiebeantriebs 15 wird daraufhin der Behälter 13 in Verschieberichtung 25 über den Ausschnitt 2 bis in die in Figur 1 links dargestellte andere Endstellung bewegt, in der der Behälter 13 unter der anderen Beschickungsvorrichtung 30 steht. Gleichzeitig mit der Verschiebung wird die Vibrationseinrichtung 26 betätigt, die den Behälter in eine Rüttelbewegung quer zur Verschieberichtung 25 und parallel zur Unterlage 9 versetzt. Dadurch wird eine Agglomeration des Pulvers in Behälter verhindert und ein ungehindertes Austreten des Materials aus der unteren Öffnung 18 auf die Unterlage 9 sichergestellt. Gleichzeitig kann durch diese Rüttelbewegung eine Verdichtung des ausgegebenen Materials erreicht werden.

Das Aufbringen des Materials auf die Unterlage 9 ist in Figur 2 genauer dargestellt. Das bei der Verschiebung des Behälters 13 in Richtung 25 (also nach links in Figur 2) aus der unteren Öffnung 18 austretenden Material wird durch das nachfolgende (in Figur 2 rechte) Abstreifelement 21 auf die gewünschte Schichtdicke s eingestellt und abgezogen, sodaß sich eine Schicht 38 mit definierter Dicke s ergibt. Dadurch, daß das Abstreifelement 21 mit dem Behälter 13 fest verbunden ist, vibriert das Abstreifelement 21 ebenso wie der Behälter 13 quer zur Verschieberichtung 25 und parallel zur Unterlage 9. Aufgrund dieser Rüttelbewegung des Abstreifelements 21 wird die Einstellgenauigkeit der Schichtdicke s und die Oberflächengüte der Schicht 38 erheblich verbessert.

Nach Auftragen und Abziehen der Schicht 38 und Vorheizen des Materials in der Schicht 38 mittels der Strahlungsheizung 38,39 auf eine geeignete Arbeitstemperatur steuert die Steuereinheit 37 die Ablenkeinrichtung 6 über deren Steuerung 8 derart, daß der abgelenkte Lichtstrahl 7 nacheinander an allen gewünschten (also dem Objekt an dieser Schicht entsprechenden) Stellen der Schicht 38 auftrifft und dort das Pulvermaterial durch Sintern verfestigt.

In einem zweiten Schritt wird die Unterlage mittels der Höheneinstellvorrichtung 10 um den Betrag der Dicke der nächsten Schicht abgesenkt und der Behälter 13 von der zweiten Beschickungsvorrichtung 30 durch Rotation der Walze 32 wieder gefüllt. Das Auftragen der nächsten Schicht erfolgt dann durch Verschieben des Behälters in entgegen der Richtung 25 unter gleichzeitigem Rütteln, wobei das Abziehen der Schicht diesmal vom anderen (in Figur 2 linken) Abstreifelement vorgenommen wird. Die Verfestigung erfolgt dann wie bei der Schicht 38.

Weitere Schichten werden analog aufgetragen, abgezogen und verfestigt, wobei der Behälter 13 bei aufeinanderfolgenden Schichten unter gleichzeitigem Rütteln immer abwechselnd von links nach rechts und umgekehrt verschoben wird. Es ist aber auch möglich, unter zweimaligem Überfahren der Unterlage 9 wieder zur Ausgangsstellung zurückzufahren, sodaß dann nur ein Vorratsbehälter und nur eine Beschickungsvorrichtung erforderlich sind.

Ein geringer Materialverbrauch ergibt sich dadurch, daß der Abstand der unteren Öffnung 18 bzw. der Abstreifelemente 21,22 von der Oberfläche des Arbeitstisches 1 nur so groß ist, daß gerade keine nennenswerte Reibung bei der Verschiebung des Behälters 13 auftritt und kein Material zwischen den Abstreifelementen 21,22 und dem Arbeitstisch 1 austreten kann. Das Material wird dann nur auf die gegenüber dem Arbeitstisch 1 abgesenkte Unterlage 9 aufgetragen. Vorzugsweise ist die Lage des Behälters 13 zur Einstellung eines derartigen geeigneten Abstandes justierbar.

Weitere Modifikationen der Erfindung sind möglich. So kann als Material auch flüssiges oder pastenförmiges Material verwendet werden, die Vorheizung kann entfallen und für die Bestrahlungsvorrichtung kann jede Strahlungsquelle für elektromagnetische Strahlung, die einen gerichteten Strahl mit ausreichender Energie abgibt, wie beispielsweise ein Lichtquelle oder auch eine Elektronenstrahlquelle, verwendet werden. Nach Verfestigung einer Schicht kann die Unterlage 9 in ihrer Lage unverändert gehalten werden, um eine die Schrumpfung der ersten Schicht ausgleichende zweite Schicht in gleicher Weise aufzubringen und zu verfestigen. Erst danach wird dann die Unterlage für die nächste Schicht abgesenkt. Die Abstreifelemente 21,22 können jedes geeignete steife oder auch geringfügig elastische Profil aufweisen und beispielsweise auch mit einer scharfen Abziehkante versehen sein. Der Querschnitt des Behälters 13 kann auch jede andere geeignet Form, beispielsweise eine rechteckige Form, aufweisen.

## Patentansprüche

1. Verfahren zum Herstellen eines dreidimensionalen Objekts, bei dem das Objekt (3) schichtweise dadurch erzeugt wird, daß jeweils eine Schicht aus durch Bestrahlen mit elektromagnetischer Strahlung verfestigbarem Material aufgetragen und anschließend an den dem Objekt (3) entsprechenden Stellen durch Bestrahlen verfestigt wird, **dadurch gekennzeichnet, daß** beim Aufbringen eine gleichmäßige Schichtdicke des aufgebrachten Materials durch Abziehen mittels eines Abstreifelements (21,22) und gleichzeitiges Vibrieren des Abstreifelements (21,22) erzeugt wird, wobei das Abstreifelement (21,22) in einer Richtung quer zur Abzugsrichtung parallel zur Schicht in Schwingung versetzt wird.

2. Verfahren nach Anspruch 1,
**dadurch gekennzeichnet, daß** die Vibration mit einer Frequenz von etwa 50 bis 500 Hertz, vorzugsweise 100 bis 200 Hertz, und einer Amplitude von etwa 0,1 bis 2mm, vorzugsweise 0,5 bis 1 mm erfolgt.

3. Verfahren nach Anspruche 1 oder 2,
**dadurch gekennzeichnet, daß** das Material während des Abziehens direkt vor das Abstreifelement (21,22) aufgebracht wird.

4. Verfahren nach einem der vorhergehenden Ansprüche,
**dadurch gekennzeichnet, daß** als Material ein pulverförmiges Feststoffmaterial verwendet wird.

5. Verfahren nach einem der vorhergehenden Ansprüche,
**dadurch gekennzeichnet, daß** nach jedem Auftragen die Abzugsrichtung geändert wird.

6. Verfahren nach einem der vorhergehenden Ansprüche,
**dadurch gekennzeichnet, daß** eine vorbestimmte Menge des Materials in einen Behälter (13) gegeben wird, der mit einem Abstreifelemente (21,22) versehen ist, und daß der Behälter (13) zum gleichzeitigen Auftragen und Abziehen in Abzugsrichtung bewegt und dabei in Schwingung versetzt wird.

7. Verfahren nach einem der vorhergehenden Ansprüche,
**dadurch gekennzeichnet, daß** das Material auf eine höhenverstellbare Unterlage (9) aufgebracht wird, die entweder nach jeder Verfestigung einer Schicht um die Dicke der nächsten Schicht abgesenkt wird oder zum Aufbringen und Verfestigen einer zweiten Schicht in ihrer Lage unverändert gehalten wird.

8. Verfahren nach einem der vorhergehenden Ansprüche,
**dadurch gekennzeichnet, daß** das Auftragen und Verfestigen des Schicht unter Schutzgasatmosphäre durchgeführt wird.

9. Vorrichtung zum Herstellen eines dreidimensionalen Objekts, insbesondere zur Durchführung des Verfahrens nach Anspruch 1,
mit einer Unterlage (9), einer Vorrichtung (12) zum Aufbringen einer Schicht eines durch Einwirkung elektromagnetischer Strahlung verfestigbaren Materials auf die Unterlage (9), und einer Bestrahlungseinrichtung (4) zum Bestrahlen des Materials an den dem Objekt entsprechenden Stellen der Schicht, wobei die Aufbringvorrichtung (12) einen oberhalb der Unterlage (9) angeordneten Behälter (13) für das Material aufweist, der mit einem Antrieb (15) zum Bewegen des Behälters (13) im wesentlichen parallel über die Unterlage (9) verbunden ist und an seiner der Unterlage (9) zugewandten Unterseite ein Abstreifelement (21, 22) zur Einstellung der Schichtdicke(s) des aufgetragenen Materials aufweist, **dadurch gekennzeichnet, daß** eine Vibrationsvorrichtung (26) zum Vibrieren des Behälters (13) bei der Bewegung in einer Richtung quer zur Bewegungsrichtung des Behälters und parallel zur Schicht vorgesehen ist.

10. Vorrichtung nach Anspruch 9,
**dadurch gekennzeichnet, daß** der Behälter (13) als eine sich quer über die Unterlage (9) erstreckende Rinne mit einer oberen Öffnung (19) zum Einfüllen des Materials und einer unteren Öffung (18) zum Auftragen des Materials ausgebildet ist.

11. Vorrichtung nach Anspruch 10,
**dadurch gekennzeichnet, daß** die Rinne einen im wesentlichen trichterförmigen Querschnitt aufweist.

12. Vorrichtung nach Anspruch 10, oder 11,
**dadurch gekennzeichnet, daß** die untere Öffnung (18) als ein sich entlang der Rinne erstreckender Schlitz ausgebildet ist.

13. Vorrichtung nach einem der Ansprüche 10 bis 12,
**dadurch gekennzeichnet, daß** in Bewegungsrichtung des Behälters (13) sowohl vor als auch hinter der unteren Öffnung (18) jeweils ein Abstreifelement (21,22) vorgesehen ist.

14. Vorrichtung nach Anspruch 12 und 13,
**dadurch gekennzeichnet, daß** die Abstreifelemente (21,22) durch die Ränder der Rinne beidseitig des Schlitzes gebildet sind.

15. Vorrichtung nach einem der Ansprüche 9 bis 14,
**dadurch gekennzeichnet, daß** der Antrieb (15) so ausgebildet ist, daß er den Behälter (13) zunächst in einer ersten Richtung (25) über die Unterlage (9) bewegt, wobei eine erste Schicht (38) aufgetragen und mittels des Abstreifelements (21) abgezogen wird, und nach der Bestrahlung der Schicht den Behälter (13) in einer zweiten Richtung im wesentlichen entgegengesetzt zur ersten Richtung (25) zum Auftragen und Abziehen der nächsten Schicht bewegt.

16. Vorrichtung nach einem der Ansprüche 9 bis 15,
**dadurch gekennzeichnet, daß** der Antrieb (15) derart ausgebildet ist, daß er den Behälter (13) nach jedem Auftragen und Abziehen in eine Endstellung bewegt.

17. Vorrichtung nach Anspruch 16,
**dadurch gekennzeichnet, daß** ein Vorratsbehälter (27,28) für das Material und eine Beschickungsvorrichtung (29,30) zum Einfüllen einer vorbestimmten Menge des Materials vom Vorratsbehälter (27,28) in den Behälter (13) in dessen Endstellung vorgesehen ist.

18. Vorrichtung nach Anspruch 17,
**dadurch gekennzeichnet, daß** die Beschickungsvorrichtung (29,30) als eine zwischen dem Vorratsbehälter (27,28) und dem Behälter (13) in dessen Endstellung angeordnete Dosiervorrichtung , vorzugsweise als Kerbwalze (31,32), ausgebildet ist.

19. Vorrichtung nach Anspruch 17 oder 18,
dadurch gekennzeichet, daß in Bewegungsrichtung des Behälters (13) an beiden Seiten der Unterlage (9) jeweils eine Endstellung mit zugehörigem Vorratsbehälter (27,28) und Beschickungsvorrichtung (29,30) vorgesehen ist.

20. Vorrichtung nach einem der Ansprüche 9 bis 19,
**dadurch gekennzeichnet, daß** die Vibrationsvorrichtung (26) als ein Rüttler ausgebildet ist, der den Behälter (13) in einer Richtung quer zur Bewegungsrichtung des Behälters (13 ) und parallel zur Schicht (38) in Schwingung versetzt.

21. Vorrichtung nach Anspruch 20,
**dadurch gekennzeichnet, daß** der Behälter (13) in Vibrationsrichtung elastisch aufgehängt ist und der Rüttler (26) am Behälter (13) angreift.

22. Vorrichtung nach einem der Ansprüche 9 bis 21,
**dadurch gekennzeichnet, daß** ein die Unterlage (9) und die Aufbringvorrichtung (12) dicht umgebendes Gehäuse (33) und eine Inertgasquelle (34) zur Zufuhr von Inertgas in das Gehäuse (33) vorgesehen ist.

23. Vorrichtung nach Anspruch 22,
**dadurch gekennzeichnet, daß** die Inertgasquelle (34) als Membran-Trennvorrichtung zur Abtrennung von Stickstoff aus Luft ausgebildet ist.

## Claims

1. Method for producing a three-dimensional object, in which the object (3) is produced in layers in such a way that in each case one layer made from material which can be solidified by irradiation with electromagnetic radiation is applied and subsequently solidified by irradiation at the locations corresponding to the object (3), **characterized in that** during application a uniform layer thickness of the applied material is produced by skimming by means of a stripping element (21, 22) and simultaneous vibration of the stripping element (21, 22), the stripping element (21, 22) being set vibrating parallel to the layer in a direction transverse to the skimming direction.

2. Method according to Claim 1, **characterized in that** the vibration is performed at a frequency of approximately 50 to 500 Hertz, preferably 100 to 200 Hertz, and with an amplitude of approximately 0.1 to 2 mm, preferably 0.5 to 1 mm.

3. Method according to Claim 1 or 2, **characterized in that** the material is applied directly upstream of the stripping element (21, 22) during the skimming.

4. Method according to one of the preceding claims, **characterized in that** a pulverulent solid material is used as material.

5. Method according to one of the preceding claims, **characterized in that** the skimming direction is changed after each application.

6. Method according to one of the preceding claims, **characterized in that** a predetermined quantity of the material is put into a container (13) which is provided with a stripping element (21, 22), and **in that** for the purpose of simultaneously applying and skimming in the skimming direction the container (13) is moved and set vibrating in the process.

7. Method according to one of the preceding claims, **characterized in that** the material is applied to a substrate (9) whose height can be adjusted which is either lowered after each solidification of a layer by the thickness of the next layer, or is held unchanged in its position for the purpose of applying and solidifying a second layer.

8. Method according to one of the preceding claims, **characterized in that** the application and solidification of the layer are carried out in an inert-gas atmosphere.

9. Device for producing a three-dimensional object, in particular for carrying out the method according to Claim 1, having a substrate (9), a device (12) for applying to the substrate (9) a layer of a material which can be solidified by exposure to electromagnetic radiation, and an irradiating device (4) for irradiating the material at those locations of the layer corresponding to the object, the applying device (12) having for the material a container (13) which is arranged above the substrate (9), is connected to a drive (15) for moving the container (13) in an essentially parallel fashion over the substrate (9), and has on its underside facing the substrate (9) a stripping element (21, 22) for setting the layer thickness (es) of the applied material, **characterized in that** a vibration device (26) is provided for vibrating the container (13) during the movement in a direction transverse to the direction of movement of the container and parallel to the layer.

10. Device according to Claim 9, **characterized in that** the container (13) is designed as a chute which extends transversely over the substrate (9) and has an upper opening (19) for filling the material and a lower opening (18) for applying the material.

11. Device according to Claim 10, **characterized in that** the chute has an essentially funnel-shaped cross section.

12. Device according to Claim 10 or 11, **characterized in that** the lower opening (18) is designed as a slot extending along the chute.

13. Device according to one of Claims 10 to 12, **characterized in that** a stripping element (21, 22) is provided in each case both upstream and downstream of the lower opening (18) in the direction of movement of the container (13).

14. Device according to Claims 12 and 13, **characterized in that** the stripping elements (21, 22) are formed by the edges of the chute on both sides of the slot.

15. Device according to one of Claims 9 to 14, **characterized in that** the drive (15) is designed such that it initially moves the container (13) over the substrate (9) in a first direction (25), a first layer (38) being applied and skimmed by means of the stripping element (21), and after the irradiation of the layer moves the container (13) in a second direction essentially opposite to the first direction (25) for the purpose of applying and skimming the next layer.

16. Device according to one of Claims 9 to 15, **characterized in that** the drive (15) is designed in such a way that it moves the container (13) into an end position after each application and skimming.

17. Device according to Claim 16, **characterized in that** provision is made of a storage bin (27, 28) for the material, and of a charging device (29, 30) for filling a predetermined quantity of the material from the storage bin (27, 28) into the container (13) in the end position thereof.

18. Device according to Claim 17, **characterized in that** the charging device (29, 30) is designed as a dosing device, preferably a notched roller (31, 32), arranged between the storage bin (27, 28) and the container (13) in the end position thereof.

19. Device according to Claim 17 or 18, **characterized in that** an end position with an associated storage bin (27, 28) and charging device (29, 30) is respectively provided in the direction of movement of the container (13) on both sides of the substrate (9).

20. Device according to one of Claims 9 to 19, **characterized in that** the vibration device (26) is designed as a shaker which sets the container (13) vibrating in a direction transverse to the direction of movement of the container (13) and parallel to the layer (38).

21. Device according to Claim 20, **characterized in that** the container (13) is suspended elastically in the direction of vibration and the shaker (26) acts on the container (13).

22. Device according to one of Claims 9 to 21, **characterized in that** provision is made of a housing (33) tightly surrounding the substrate (9) and the applying device (12), and of an inert gas source (34) for feeding inert gas into the housing (33).

23. Device according to Claim 22, **characterized in that** the inert gas source (34) is designed as a diaphragm separating device for separating nitrogen from air.

## Revendications

1. Procédé de fabrication d'un objet tridimensionnel dans lequel l'objet (3) est généré par couches en ce que chaque fois une couche de matière compactable par irradiation avec une radiation électromagnétique est appliquée et est ensuite compactée par irradiation aux endroits correspondants à l'objet (3), **caractérisé en ce que** lors de l'application, une épaisseur de couche régulière de la matière appliquée est générée par lissage au moyen d'un élément racleur (21, 22) et par vibration simultanée de l'élément racleur (21, 22), celui-ci étant déplacé dans une direction transversale par rapport au sens de lissage et parallèle à la couche en vibration.

2. Procédé selon la revendication 1, **caractérisé en ce que** la vibration a lieu à une fréquence de 50 à 500 Hertz environ, de préférence 100 à 200 Hertz et à une amplitude de 0,1 à 2 mm environ, de préférence de 0,5 à 1 mm.

3. Procédé selon la revendication 1 ou 2, **caractérisé en ce que** la matière est appliquée pendant le lissage, juste avant l'élément racleur (21,22).

4. Procédé selon l'une quelconque des revendications précédentes, **caractérisé en ce que** la matière utilisée est une matière solide en poudre.

5. Procédé selon l'une quelconque des revendications précédentes, **caractérisé en ce que** le sens de lissage est modifié après chaque application.

6. Procédé selon l'une quelconque des revendications précédentes, **caractérisé en ce qu'**une quantité prédéfinie de matière est introduite dans un conteneur (13) muni d'un élément racleur (21, 22) et **en ce que** le conteneur (13) est déplacé dans le sens de lissage pour l'application et le lissage simultanés et en même temps, est soumis à des vibrations.

7. Procédé selon l'une quelconque des revendications précédentes, **caractérisé en ce que** la matière est appliquée sur un support (9) réglable en hauteur qui est, soit abaissé de l'épaisseur de la couche suivante après chaque compactage d'une couche, soit maintenu de manière inchangée dans sa position pour l'application et le compactage d'une seconde couche.

8. Procédé selon l'une quelconque des revendications précédentes, **caractérisé en ce que** l'application et le compactage de la couche sont effectués dans une atmosphère de gaz protecteur.

9. Dispositif de fabrication d'un objet tridimensionnel, notamment pour l'exécution du procédé selon la revendication 1, comportant un support (9), un dispositif (12) pour l'application d'une couche de matière compactable sous l'effet d'une radiation électromagnétique sur le support (9) et un dispositif d'irradiation (4) pour irradier la matière aux endroits de la couche correspondant à l'objet, le dispositif d'application (12) comprenant un conteneur (13) destiné à la matière qui est disposé au-dessus du support (9) et est relié à une commande d'entraînement (15) pour le déplacement du conteneur (13) sensiblement parallèlement au-dessus du support (9) et qui présente sur son côté inférieur tourné vers le support (9) un élément racleur (21, 22) pour l'ajustage de l'épaisseur de la couche s de la matière appliquée, **caractérisée en ce qu'**un dispositif de vibrations (26) est prévu pour la vibration du conteneur (13), lors du déplacement de celui-ci, dans une direction perpendiculaire à la direction de déplacement du conteneur et parallèle à la couche.

10. Dispositif selon la revendication 9, **caractérisé en ce que** le conteneur (13) est réalisé sous forme de goulotte qui s'étend transversalement au-dessus du support (9) et qui présente une ouverture supérieure (19) pour l'admission de la matière et une ouverture inférieure (18) pour l'application de la matière.

11. Dispositif selon la revendication 10, **caractérisé en ce que** la goulotte présente une section transversale sensiblement en forme d'entonnoir.

12. Dispositif selon la revendication 10 ou 11, **caractérisé en ce que** l'ouverture inférieure (18) est réalisée sous forme de fente s'étendant le long de la goulotte.

13. Dispositif selon l'une quelconque des revendications 10 à 12, **caractérisé en ce qu'**il est prévu respectivement un élément racleur (21, 22) dans le sens de déplacement du conteneur (13), aussi bien devant que derrière l'ouverture inférieure (18).

14. Dispositif selon les revendications 12 et 13, **caractérisé en ce que** les éléments racleurs (21, 22) sont formés par les bords de la goulotte des deux côtés de la fente.

15. Dispositif selon l'une quelconque des revendications 9 à 14, **caractérisé en ce que** la commande d'entraînement (15) est susceptible de déplacer le conteneur (13) tout d'abord dans une première direction (25) au-dessus du support (9), une première couche (38) étant alors appliquée et lissée au moyen de l'élément racleur (21) et après l'irradiation de la couche, de déplacer le conteneur (13) dans une seconde direction sensiblement opposée à la première direction (25) pour l'application et le lissage de la couche suivante.

16. Dispositif selon l'une quelconque des revendications 9 à 15, **caractérisé en ce que** la commande d'entraînement (15) est conçue de telle sorte qu'après chaque application et lissage, elle déplace le conteneur (13) vers une position finale.

17. Dispositif selon la revendication 16, **caractérisé en ce qu'**il est prévu un conteneur de réserve (27, 28) pour la matière et un dispositif de distribution (29, 30) pour le versement d'une quantité prédéfinie de la matière depuis le conteneur de réserve (27, 28) dans le conteneur (13) dans sa position finale.

18. Dispositif selon la revendication 17, **caractérisé en ce que** le dispositif de distribution (29, 30) est conçu comme un dispositif de dosage disposé entre le conteneur de réserve (27, 28) et le conteneur (13) dans sa position finale, de préférence comme un cylindre à encoche (31,32).

19. Dispositif selon la revendication 17 ou 18, **caractérisé en ce que** dans le sens de déplacement du conteneur (13) des deux côtés du support (9), il est prévu respectivement une position finale avec un conteneur de réserve (27, 28) correspondant et un dispositif de distribution (29, 30).

20. Dispositif selon l'une quelconque des revendications 9 à 19, **caractérisé en ce que** le dispositif de vibration (26) est réalisé sous forme d'un agitateur à vibrations qui déplace le conteneur (13), sous l'effet de vibrations, dans une direction transversale par rapport au sens de déplacement du conteneur (13) et parallèlement à la couche (38).

21. Dispositif selon la revendication 20, **caractérisé en ce que** le conteneur (13) est suspendu de façon élastique dans une direction de vibration et **en ce que** l'agitateur à vibrations (26) est appliqué contre le conteneur (13).

22. Dispositif selon l'une quelconque des revendications 9 à 21, **caractérisé en ce qu'**il est prévu un bâti (33) entourant de manière étanche le support (9) et le dispositif d'application (12) ainsi qu'une source de gaz inerte (34) pour l'admission de gaz inerte dans le bâti (33).

23. Dispositif selon le revendication 22, **caractérisé en ce que** la source de gaz inerte (34) est constituée par un dispositif de séparation à membrane permettant de séparer l'azote de l'air.
